# EUROPEAN PATENT APPLICATION

(11) **EP 4 571 982 A1**
(43) Date of publication of application: **18.06.2025**
(21) Application number: 24753697.2
(22) Date of filing: 05.02.2024
(51) Int. Cl.: H01M 50/289, H01M 50/291, H01M 50/293, H01M 50/204

(54) **BATTERY PACK**

(30) Priority: 06.02.2023 KR 20230015814
(71) Applicant: LG Energy Solution, Ltd., Seoul 07335 (KR)
(72) Inventor: SON, Hong Se, Daejeon 34122 (KR); LEE, Hyoung Suk, Daejeon 34122 (KR); KIM, Min Gu, Daejeon 34122 (KR); KIM, Jin Hyuk, Daejeon 34122 (KR)
(74) Representative: Plasseraud IP
(86) International application number: PCT/KR2024/095071
(87) International publication number: WO 2024/167376

(57) **Abstract**

The present technology relates to a battery pack comprising a pack case accommodating a cell stack assembly comprising a plurality of cells, wherein the pack case includes a base plate supporting a lower portion of the cell stack assembly; side walls coupled to a rim of the base plate to support lateral portions of the cell stack assembly; and a separation wall interposed between a pair of neighboring cell stack assemblies and coupled to the base plate, wherein the pack case further includes a hollow part within the separation wall and a truss beam inserted to divide the hollow part.

## Description

### [Cross-Reference to Related Applications]

The present application is a national phase entry under of International Application No. , filed on , which claims priority from Korean Patent Application No. 10-2023-0015814, filed on February 06 , 2023, all of which are incorporated herein by reference.

### [Technical Field]

The present disclosure relates to a battery pack. The battery pack of the present disclosure is characterized in that it has a structure capable of minimizing heat transfer by conduction, convection, and radiation due to thermal runaway of the cells accommodated therein, by using a separation wall comprising a truss beam having a hollow part inside and inserted to divide the hollow part.

### [Background Art]

The types of secondary batteries that are currently widely used include lithium-ion batteries, lithium polymer batteries, nickel-cadmium batteries, nickel-hydrogen batteries, nickel-zinc batteries, etc. The operating voltage of such unit secondary battery cells, in other words, unit battery cells, is about 2.5V to 4.5V. Therefore, if a higher output voltage than this is required, a plurality of such battery cells may be connected in series to form a battery pack. In addition, a battery pack may be configured by connecting a plurality of battery cells in parallel according to a charge and discharge capacity required for the battery pack. Accordingly, the number of battery cells included in the battery pack may be varied depending on the required output voltage or charge and discharge capacity.

When constructing a battery pack by connecting a plurality of battery cells in series/parallel, it is general to first construct a battery module comprising at least one battery cell, and to construct a battery pack by adding other components using such at least one battery module.

A conventional battery module generally includes at least one cell stack comprising battery cells and a housing structure made of a metal material in a box form accommodating such at least one cell stack, in other words, a module frame, etc.

Further, in order to solve the problem that the energy density of the entire battery pack is reduced due to the weight or volume, and the like of the module frame itself, and the weight of the entire battery pack is increased, a cell stack assembly excluding the module frame composition that wraps and protects the cell stack is utilized as a substitute for the conventional battery module.

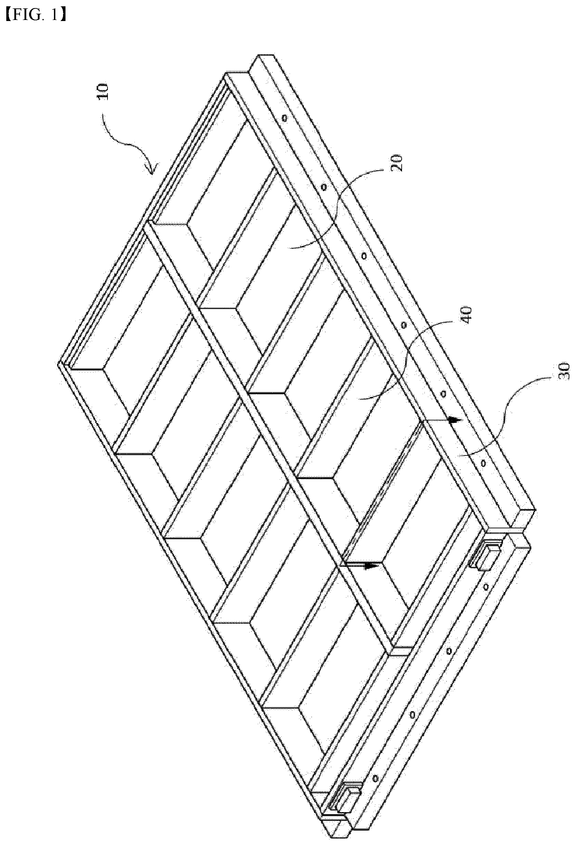

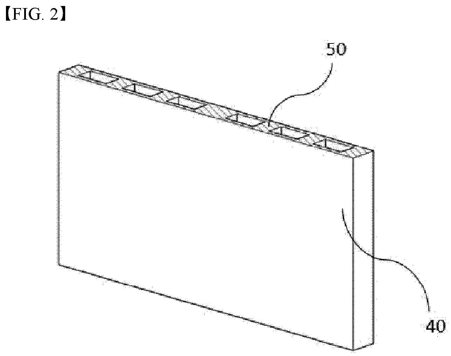

FIG. 1 illustrates a pack case included in a conventional battery pack, and FIG. 2 is a cross-sectional perspective view of one of the separation walls included in the pack case of FIG. 1.

A conventional battery pack in which a battery module or cell stack assembly is accommodated has the form shown in FIG. 1. In other words, the conventional battery pack includes a pack case 10 having a base plate 20 corresponding to a bottom portion and side walls 30 coupling to a rim of the base plate 20, and a plurality of separation walls 40 coupling to the base plate 20 to divide the inside of the pack case 10.

Conventionally, a hollow type of separation wall 40 has been used to reduce the weight of the separation wall 40 while preventing heat from conducting through the separation wall 40 to the other side. However, since the above hollow-type separation wall 40 has weak mechanical strength, it was difficult to protect a normal cell stack assembly from a high explosion pressure when a heat runaway occurs in the cell stack assembly.

Therefore, in order to solve the above mechanical strength problem, a separation wall 40 with stiffening ribs 50 as shown in FIG. 2 was developed, but when the thickness of the stiffening ribs 50 was increased to increase the mechanical strength, there was a problem that it was difficult to reduce the weight of the separation wall 40, and a new problem occurred that it was impossible to prevent the mass conduction of heat through the stiffening ribs 50.

On the other hand, there has been a problem that if the thickness of the stiffening rib 50 is reduced, it is difficult to achieve the original purpose of reaching the desired mechanical strength.

In general, heat is transferred in the form of radiation, convection and conduction, and there is a need for the development of a battery pack which includes a separation wall 40 having excellent mechanical strength while being able to effectively prevent the movement of heat inside the battery pack in various forms as described above.

### [Disclosure]

### [Technical Problem]

Therefore, the present disclosure has been invented to solve the above problems and is directed to providing a battery pack having a structure capable of preventing heat from being transferred to other cells in the case of thermal runaway of any one of the cells, resulting in serial thermal runaway.

The present disclosure also is directed to provide a battery pack having a separation wall capable of withstanding an explosion pressure accompanying a thermal runaway of a cell, in the event of a thermal runaway of the cell.

The present disclosure also is directed to provide a battery pack that is lightweight.

Other objects and advantages of the present disclosure will be understood from the following description, which will become more apparent from the embodiments of the present disclosure, and it will be easily understood that the objects and advantages of the present disclosure may be realized by the means and combinations thereof disclosed in the claims of the patent.

### [Technical Solution]

The present disclosure provides a battery pack comprising a pack case accommodating a cell stack assembly comprising a plurality of cells, wherein the pack case includes a base plate supporting a lower portion of the cell stack assembly; side walls coupled to a rim of the base plate to support lateral portions of the cell stack assembly; and a separation wall interposed between a pair of neighboring cell stack assemblies and coupled to the base plate, wherein the pack case further includes a hollow part within the separation wall and a truss beam inserted to divide the hollow part.

An inner surface of the separation wall may be coated with a metal thin film.

The truss beam may comprise a plurality of bending parts, and the separation wall may be supported by the bending parts.

The truss beam may be bent along a length direction of the separation wall.

The truss beam may be formed extended along a height direction of the separation wall.

A metal thin film may be coated on the surface of the truss beam.

The truss beam may comprise a material of any one of plastic, aluminum, and steel.

The pack case may further include a hollow part inside the base plate, and a lower truss beam inserted to divide the hollow part.

The lower truss beam may include a plurality of bending parts and may support the base plate with the bending parts.

The lower truss beam may be bent along a horizontal direction.

A highly reflective metal thin film may be coated on a surface of the lower truss beam.

The lower truss beam may comprise a material of any one of plastic and steel.

### [Advantageous Effects]

According to the battery pack of the present disclosure, the risk of explosion can be reduced by minimizing internal heat transfer.

Also, according to the battery pack of the present disclosure, the energy density can be improved due to light weight.

Furthermore, according to the battery pack of the present disclosure, the mechanical strength of the internal framework can be improved to improve stability.

### [Brief Description of the Drawings]

FIG. 1 is a perspective view of a pack case included in a conventional battery pack.
FIG. 2 is a cross-sectional perspective view of any one of the separation walls included in the pack case of FIG. 1.
FIG. 3 is a perspective view of a pack case included in a battery pack according to a first embodiment of the present disclosure.
FIG. 4 is a perspective view of at least one separation wall included in the pack case of FIG. 3.
FIG. 5 is a horizontal cutaway view of the separation wall of FIG. 4.
FIG. 6 is a plan view of the separation wall of FIG. 5.
FIG. 7 illustrates the separation wall excluding the truss beam.
FIG. 8 illustrates the process of inserting a truss beam into the separation wall.
FIG. 9 illustrates a direction of force distribution in a truss beam.
FIG. 10 is an enlarged view of a portion of a truss beam.
FIG. 11 illustrates a cell stack assembly and a separation wall disposed adjacent to each other in a pack case.
FIG. 12 is a plan view of a separation wall and a cut separation wall of a battery pack according to a second embodiment of the present disclosure.
FIG. 13 is a plan view of a separation wall and a cut separation wall of a battery pack according to a third embodiment of the present disclosure.
FIG. 14 is a plan view of a separation wall and a cut separation wall of a battery pack according to a fourth embodiment of the present disclosure.
FIG. 15 is a partial cross-sectional view of a pack case included in a battery pack according to a fifth embodiment of the present disclosure, and of a base plate included in the pack case.

### [Detailed Description]

The present disclosure will now be described in detail with reference to the accompanying drawings, which illustrate preferred embodiments of the present disclosure. It is hereby understood that the terms and words used in this specification and claims are not to be construed in their ordinary or dictionary sense, but are to be interpreted with a meaning and concept consistent with the technical idea of the present disclosure, based on the principle that the inventor may define the concept of a term as he or she considers appropriate to best describe the disclosure.

However, it should be understood that the present disclosure is not limited to the specific embodiments, and includes all modifications, equivalents, or alternatives within the spirit and technical scope of the present disclosure.

In addition, in describing the present disclosure, specific descriptions of related disclosed configurations or functions are omitted where it is considered that such detailed description would obscure the subject matter of the present disclosure.

The present disclosure is shown in embodiment to more fully explain the present disclosure to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

The present disclosure relates to a battery pack. The battery pack of the present disclosure is characterized in that it has a structure capable of minimizing heat transfer by conduction, convection, and radiation due to thermal runaway of the cells accommodated therein, by using a separation wall including a hollow part inside and a truss beam inserted to divide the hollow part.

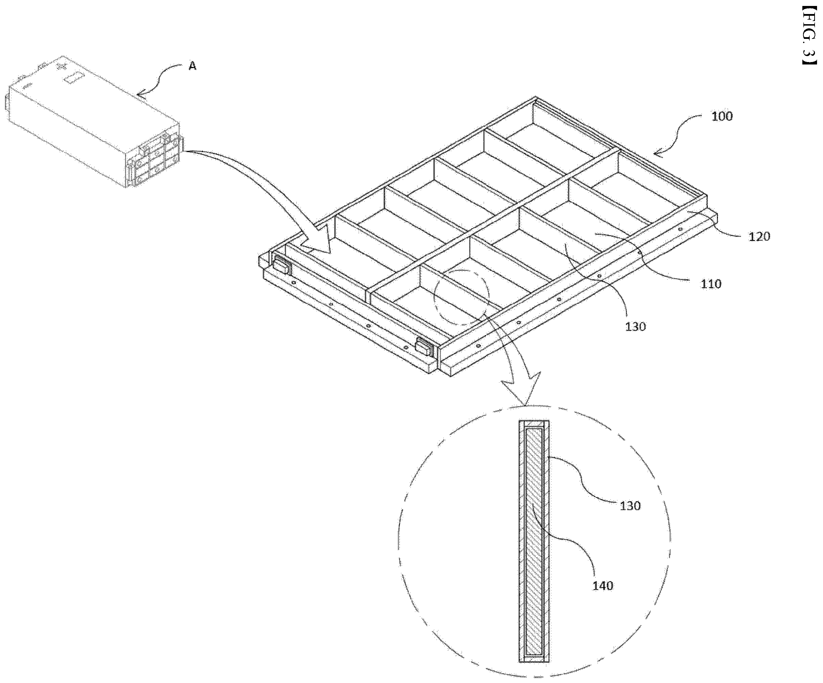

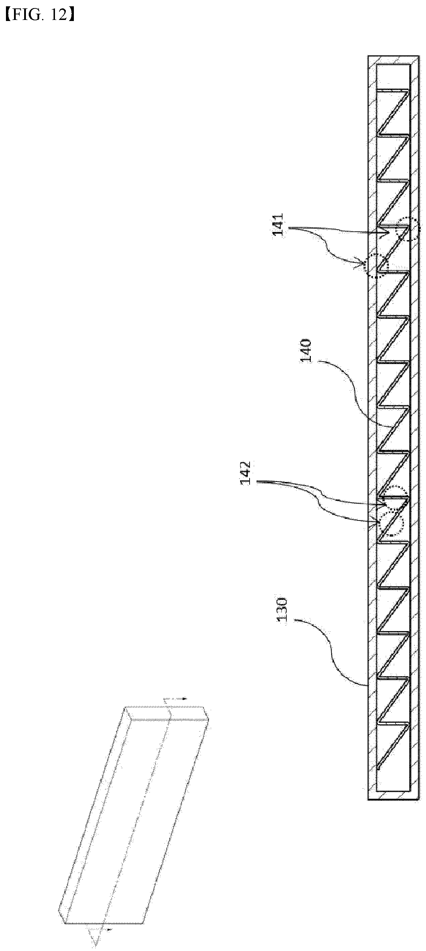

FIG. 3 to FIG. 11 relate to a battery pack according to a first embodiment of the present disclosure, and FIG. 12 to FIG. 15 relate to a battery pack according to a second to fifth embodiment of the present disclosure, respectively.

Hereinafter, the battery pack of the present disclosure will be described with reference to the respective drawings.

### (First embodiment)

FIG. 3 is a perspective view of a pack case 100 included in a battery pack according to a first embodiment of the present disclosure.

The battery pack of the present disclosure includes a pack case 100 that accommodates a cell stack assembly A comprising a plurality of cells.

The cell stack assembly A accommodated in the battery pack of the present disclosure includes a plurality of cells stacked in a first direction and electrically connected to each cell stack assembly A to transfer electrical energy from each cell stack assembly A to the outside.

Each of the cells has a pair of electrode leads having different polarities extending from one or both sides thereof.

The cell stack assembly A includes a busbar frame having a busbar in electrical connection with each electrode lead of the plurality of the stacked cells, and an end plate coupling to cover the busbar frame.

In addition, it may further include a module frame that wraps around and covers a perimeter of the cell stack to protect the plurality of cells if needed.

The pack case 100 includes a base plate 110, a side wall 120, and a separation wall 130, as shown in FIG. 3.

The base plate 110 serves to support a lower portion of the cell stack assembly A.

The side walls 120 are coupled to the rim of the base plate 110 to support a lateral portion of each cell stack assembly A seated on the base plate 110.

The separation wall 130 is interposed between any pair of neighboring disposed cell stack assemblies A and coupled to the base plate 110. Thus, the separation wall 130 serves to separate each cell stack assembly A while also serving as protection to withstand the explosive pressure of the cell stack assemblies A accompanying the thermal runaway in the event that any one of the cell stack assemblies A expands due to thermal runaway.

The separation wall 130 of the present disclosure is characterized in that it includes a hollow part 131 therein to obtain light weight, and the mechanical strength which may be weakened by the hollow part 131 is supplemented by a truss beam 140 inserted therein.

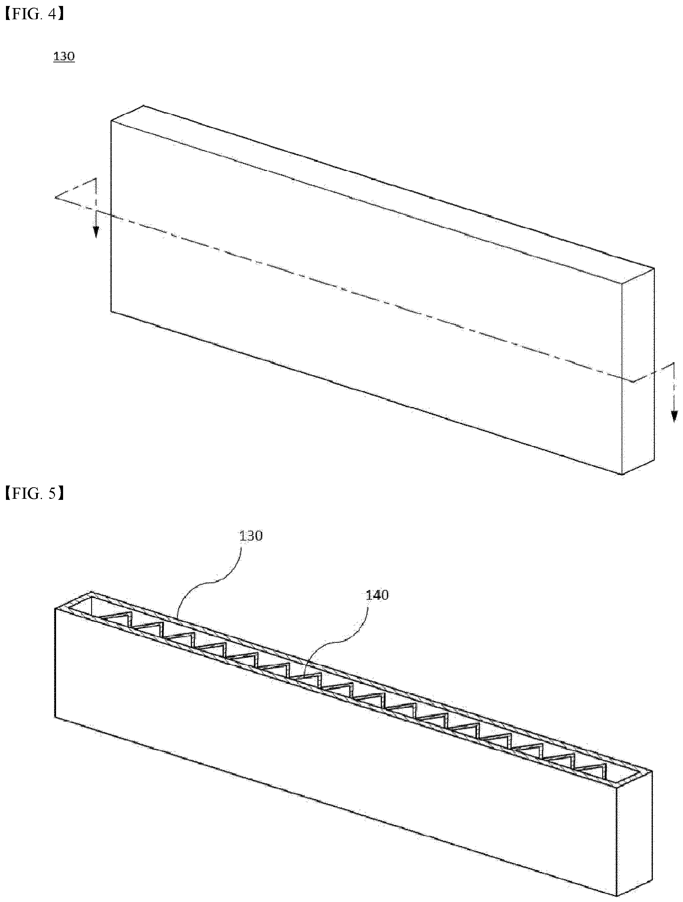

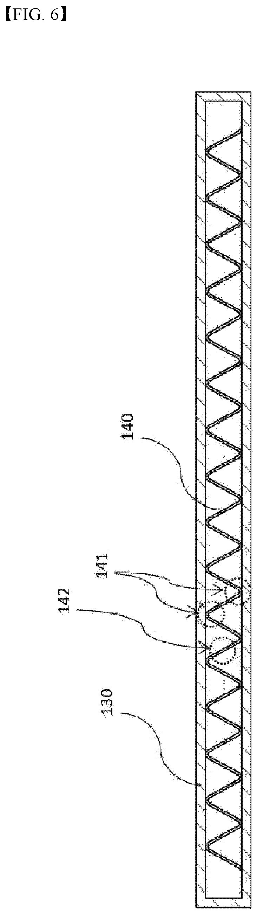

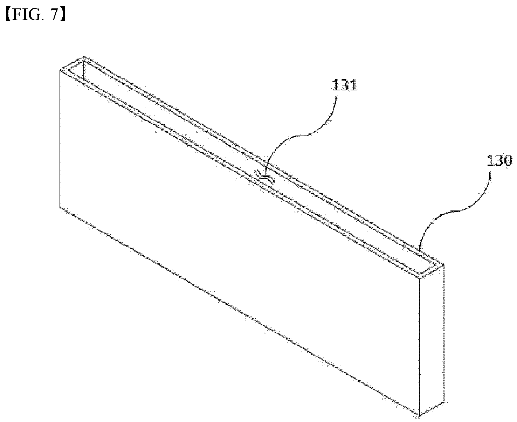

FIG. 4 is a perspective view of any one of the separation walls 130 included in the pack case 100 of FIG. 3, FIG. 5 is a horizontal cutaway view of the separation wall 130 of FIG. 4, FIG. 6 is a plan view of the separation wall 130 of FIG. 5, and FIG. 7 is a view of the separation wall 130 excluding the truss beam 140.

The separation wall 130 is hollow inside to form a hollow part 131 as shown in FIG. 7.

The inside of the hollow part 131 is in a vacuum or filled with air and is characterized in that heat transfer by conduction and convection, etc. is minimized.

Although not illustrated, the separation wall 130 of the present disclosure is further characterized by the addition of a metal thin film composition to limit the transfer of heat in the form of radiation through the inner hollow part 131.

In other words, the inner surface of the separation wall 130 may be coated with a metal thin film having a high reflectivity to radiant heat.

The metal thin film serves to block heat from transferring in the form of radiation through the hollow part 131 of the separation wall 130. In this case, the metal thin film may be, for example, aluminum foil and silver foil, etc.

Inside the separation wall 130, a truss beam 140 is included, which is inserted to divide the hollow part 131 as shown in FIGS. 5 and 6.

The truss beam 140 includes a plurality of bending parts 141 and serves to support the separation wall 130 with the bending parts 141.

The truss beam 140 included in the separation wall 130 of the battery pack according to the first embodiment of the present disclosure is extended by the plurality of bending parts 141 to form an equilateral triangle or a regular triangle, as shown in FIG. 6.

In other words, the truss beam 140 is characterized in that it has a warren truss structure. Specifically, the truss beam 140 is formed by a bending part 141 and an extension of two supporting parts 142 extending in opposite directions from the bending part 141. In this case, each supporting part 142 is diagonal and connects one side of the separation wall 130 of the hollow part 131 to the other side.

The truss beam 140 extends along the length direction of the separation wall 130, as shown in FIG. 6, forming a plurality of bending parts 141, and extends along the height direction of the separation wall 130, as shown in FIG. 5, maintaining the cross-sectional shape of FIG. 6, to fill all of the hollow parts 131 inside the separation wall 130.

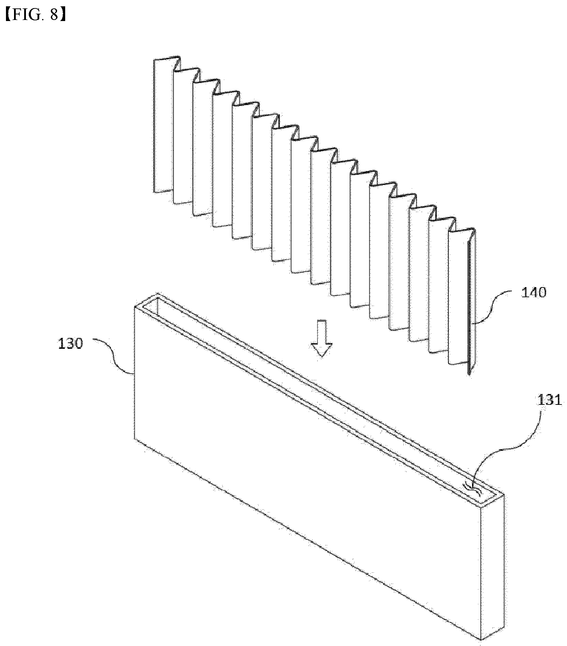

FIG. 8 illustrates a process of inserting a truss beam 140, which is extensively formed along the length direction and the height direction of the separation wall 130, into the separation wall 130.

Thus, the truss beam 140 can be inserted to fill all of the hollow part 131 as shown in FIG. 8 to support the separation wall 130 from the inside.

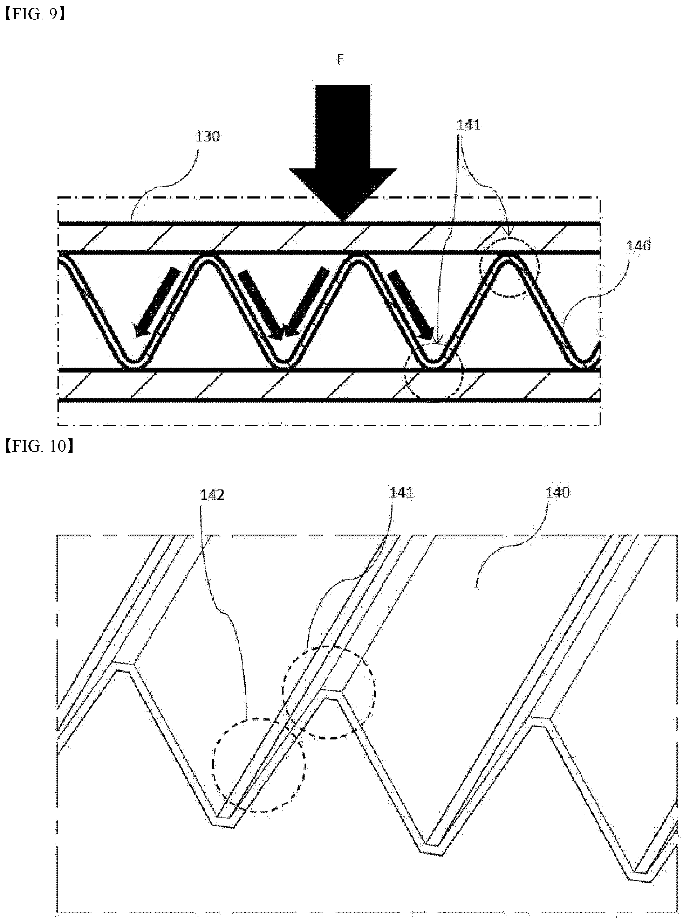

FIG. 9 illustrates the process of force distribution of the truss beam 140 inside the separation wall 130 when an external force F is applied.

Meanwhile, according to FIG. 9, the external force F transmitted from one side is firstly distributed and transmitted to each bending part 141 of the truss beam 140, and from one bending part 141, the force is again distributed in two directions and transmitted to the opposite bending part 141. Meanwhile, the external force F passing through the truss beam 140 inside the separation wall 130 may be momentarily dispersed and weakened, and consequently only a halved force is transmitted to the opposite side of the separation wall 130.

The above-mentioned feature of the truss beam 140 may also be applicable to heat transfer, in other words, the heat of the high temperature transmitted with the external force F may be dispersed through the truss beam 140 and weakened as it moves. Additionally, the heat moving through the truss beam 140 may be partially cooled by air or the like in the hollow part 131.

Although not illustrated, the surface of the truss beam 140 may be coated with a highly reflective metallic thin film, as may the inner surface of the separation wall 130. In other words, heat radiating into the hollow part 131 may be reflected by the surface of the truss beam 140, which divides the space inside the hollow part 131, and may not be able to move to the other side.

The truss beam 140 may be made of any one of reinforced plastic, aluminum, and steel. However, it is preferred that the truss beam 140 is of the same material as the separation wall 130, which is made of metal. This is because coupling via welding between the same materials is the best way to fix the truss beam 140 to the inside of the separation wall 130. In this case, the welding is performed between a bending part 141 of the truss beam 140 and an inner surface of the separation wall 130 contacting the bending part 141.

FIG. 10 is an enlarged view of a portion of the truss beam 140.

As shown in FIG. 10, it can be seen that the outer end where the bending part 141 is formed is planar for ease of joining with the inner surface of the separation wall 130.

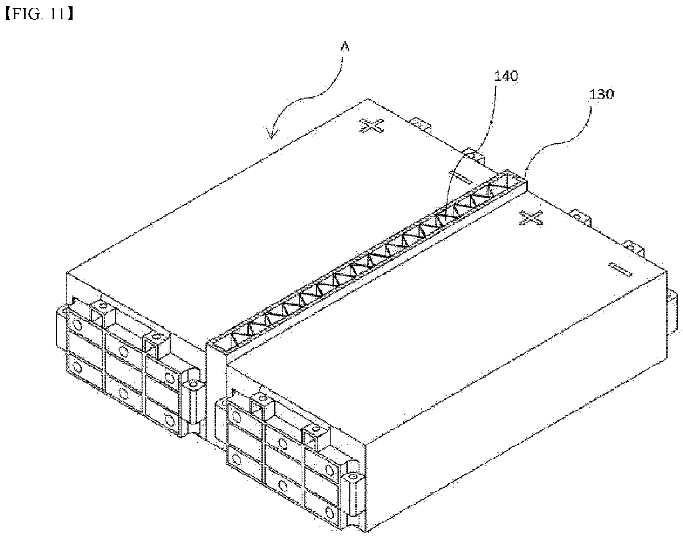

FIG. 11 illustrates a pair of cell stack assemblies A disposed adjacent to each other within the pack case 100 and a separation wall 130 interposed therebetween. (For ease of understanding, the top of the separation wall 130 is shown cut away.)

The separation wall 130 supports two cell stack assemblies A on both sides of the separation wall 130 in close contact with each other, as shown in FIG. 11. In the event that either of the cell stack assemblies A undergoes thermal runaway, expands, and releases high temperature heat and gases, the hollow part 131 and the truss beam 140 inside the separation wall 130 prevent or reduce the generated explosion pressure and heat from being transferred to the cell stack assembly A on the opposite side.

The battery pack of the present disclosure may further include an upper case (not shown) coupling with the pack case 100 to cover an upper portion of the cell stack assembly A accommodated within the pack case 100.

The upper portion of the case is not a major feature of the present disclosure and thus will not be described.

### (Second embodiment)

FIG. 12 is a plan view of a separation wall 130 of a battery pack according to a second embodiment of the present disclosure, and of a cut separation wall 130.

The truss beam 140 includes a plurality of bending parts 141 as shown in FIG. 12 and serves to support the separation wall 130 with the bending parts 141.

The truss beam 140 is formed as an extension of the bending parts 141 and two supporting parts 142 extending oppositely from the bending parts 141. In this case, each supporting part 142 has alternating vertical and diagonal lines and connects one side of the separation wall 130 of the hollow part 131 to the other side.

Specifically, any one supporting part 142 extending from the bending part 141 connects one side and the other side of the separation wall 130 vertically, and the other supporting part 142 connects one side and the other side of the separation wall 130 diagonally.

By varying the lengths of the supporting parts 142 included in the truss beam 140 in such manner, it may be intended to transfer forces and heat directions unevenly.

### (Third embodiment)

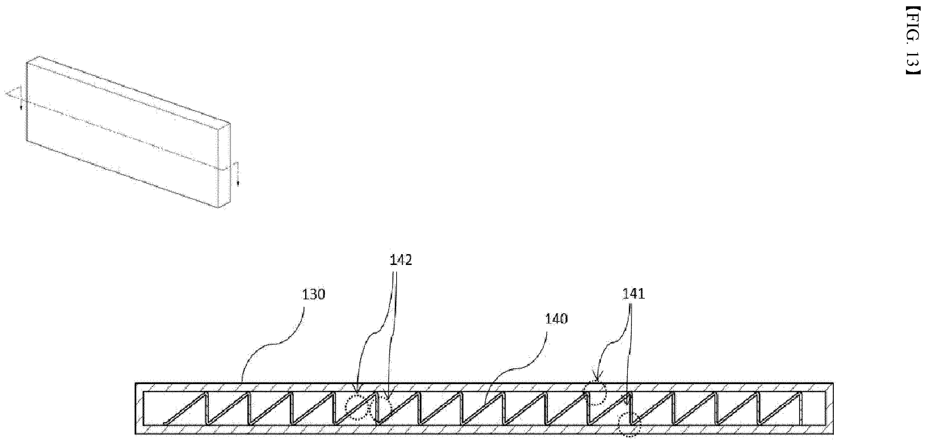

FIG. 13 is a plan view of a separation wall 130 of a battery pack and of a cut separation wall 130 according to a third embodiment of the present disclosure.

The truss beam 140 includes a plurality of bending parts 141 as shown in FIG. 13 and serves to support the separation wall 130 with the bending parts 141.

The truss beam 140 is formed as an extension of the bending parts 141 and two supporting parts 142 extending in opposite directions from the bending parts 141. In this case, each supporting part 142 has alternating vertical and diagonal lines and connects one side of the separation wall 130 of the hollow part 131 to the other side.

Specifically, any one supporting part 142 extending from the bending part 141 connects one side and the other side of the separation wall 130 vertically, and the other supporting part 142 connects one side and the other side of the separation wall 130 diagonally.

By varying the lengths of the supporting parts 142 included in the truss beam 140 in such manner, it may be intended to transfer forces and heat directions unevenly.

### (Fourth embodiment)

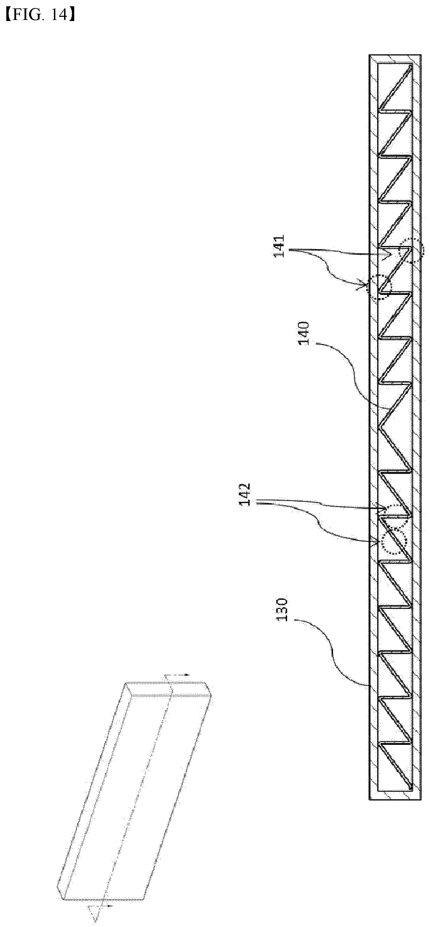

FIG. 14 is a plan view of a separation wall 130 of a battery pack and a cut separation wall 130 according to a fourth embodiment of the present disclosure.

The truss beam 140 includes a plurality of bending parts 141 as shown in FIG. 14 and serves to support the separation wall 130 with the bending parts 141.

The truss beam 140 is formed as an extension of the bending parts 141 and two supporting parts 142 extending in opposite directions from the bending parts 141. In this case, one bending part 141 is connected to a pair of diagonally extending supporting parts 142, and the supporting parts 142 connected to the other bending part 141 are alternately vertical and diagonal, connecting one side of the separation wall 130 of the hollow part 131 with the other side.

The truss beam 140 of such a structure is intended to spread forces and pressures toward both ends, centering on the bending part 141 connected to the two diagonally shaped supporting parts 142.

### (Fifth embodiment)

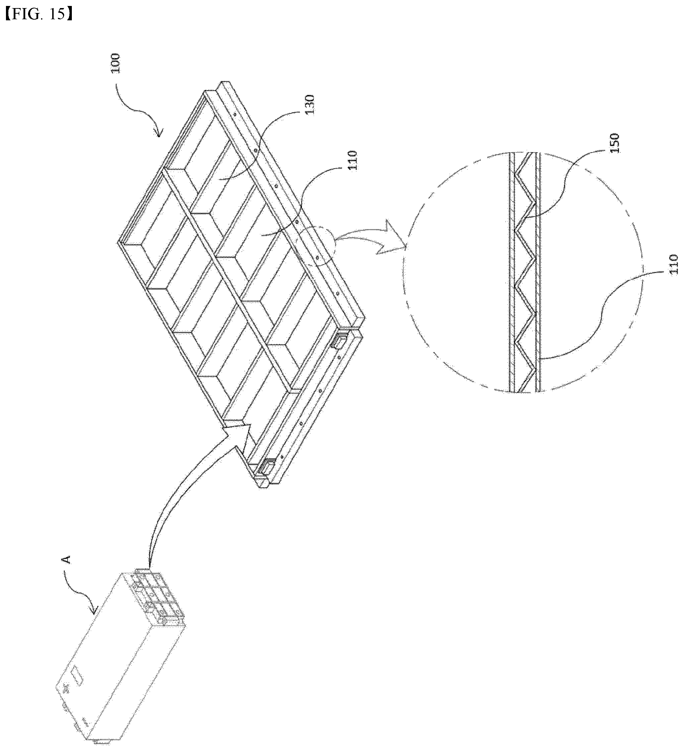

FIG. 15 is a partial cross-sectional view of a pack case included in a battery pack according to a fifth embodiment of the present disclosure, and of a base plate included in the pack case.

The base plate 110, in the same manner as the separation wall 130, has a hollow structure, in other words, the base plate 110 includes a lower hollow part therein, and the pack case 100 of the present disclosure further includes a lower truss beam 150 inserted to divide the lower hollow part of the base plate 110.

Referring to FIG. 15, the lower truss beam 150 comprises a plurality of bending parts 141, and supports the base plate 110 with the bending parts 141 .

The lower truss beam 150 is provided inside the lower hollow part of the base plate 110 in a configuration in which the truss beam 140 applied to the separation wall 130 is inverted, in other words, the lower truss beam 150 is bent along a horizontal direction.

The inner surface of the base plate 110 may be coated with a highly reflective metal thin film, and the metal thin film may also be coated on the surface of the lower truss beam 150.

The lower truss beam 150 may comprise a material of any one of plastic and steel. Preferably, the lower truss beam 150 is of the same material as the base plate 110 for ease of joining and the like.

The lower truss beam 150, as shown in FIG. 15, supports the weight of the cell stack assembly A located on the upper portion of the base plate 110. In particular, when one of the cell stack assemblies A expands or explodes due to thermal runaway, the explosion pressure can be distributed. Further, it absorbs and cools the high temperature heat generated by the thermal runaway.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

10: (conventional art) pack case
20: (conventional art) base plate
30: (conventional art) side wall
40: (conventional art) separation wall
50: (conventional art) stiffening rib
100: pack case
110: base plate
120: side wall
130: separation wall
131: hollow part
140: truss beam
141: bending part
142: supporting part
150: lower truss beam
A: cell stack assembly
F: external force

## Claims

1. A battery pack, comprises a pack case accommodating a cell stack assembly comprising a plurality of cells,
wherein the pack case, comprising:
a base plate supporting a lower portion of the cell stack assembly;
side walls coupled to a rim of the base plate to support lateral portions of the cell stack assembly; and
a separation wall interposed between a pair of neighboring cell stack assemblies and coupled to the base plate,
wherein the pack case further comprises a hollow part within the separation wall and a truss beam inserted to divide the hollow part.

2. The battery pack of claim 1, wherein an inner surface of the separation wall is coated with a metal thin film.

3. The battery pack of claim 1, wherein the truss beam comprises a plurality of bending parts, and the separation wall is supported by the bending parts.

4. The battery pack of claim 1, wherein the truss beam is bent along a length direction of the separation wall.

5. The battery pack of claim 1, wherein the truss beam is formed extended along a height direction of the separation wall.

6. The battery pack of claim 1, wherein a metal thin film is coated on the surface of the truss beam.

7. The battery pack of claim 1, wherein the truss beam comprises a material of any one of plastic, aluminum, and steel.

8. The battery pack of claim 1, wherein the pack case further comprises a hollow part inside the base plate, and a lower truss beam inserted to divide the hollow part.

9. The battery pack of claim 8, wherein the lower truss beam comprises a plurality of bending parts and supports the base plate with the bending parts.

10. The battery pack of claim 8, wherein the lower truss beam is bent along a horizontal direction.

11. The battery pack of claim 8, wherein a highly reflective metal thin film is coated on a surface of the lower truss beam.

12. The battery pack of claim 8, wherein the lower truss beam comprises a material of any one of plastic and steel.
